# EUROPEAN PATENT APPLICATION

(11) **EP 4 389 838 A1**
(43) Date of publication of application: **26.06.2024**
(21) Application number: 21954284.2
(22) Date of filing: 15.12.2021
(51) Int. Cl.: C09D 193/04, B05D 7/24, B32B 27/16, C09D 4/00, C09D 7/63

(54) **ACTIVE-ENERGY-RAY-CURABLE COATING VARNISH, AND LAMINATE**

(30) Priority: 19.08.2021 JP 2021133876
(71) Applicant: Artience Co., Ltd., Chuo-ku Tokyo 104-8377 (JP); Toyo Ink Co., Ltd., Tokyo 104-8378 (JP)
(72) Inventor: MIYAZAKI, Tomoya, Tokyo 104-8378 (JP)
(74) Representative: SSM Sandmair
(86) International application number: PCT/JP2021/046335
(87) International publication number: WO 2023/021718

(57) **Abstract**

Provided is active energy ray-curable coating varnish including: a rosin-modified resin; a polymerization inhibitor; and an active energy ray-curable compound, and a laminated body using the varnish. The active energy ray-curable coating varnish can achieve both coating film durability, such as abrasion resistance and adhesiveness, and storage stability in a printing machine and product storage while having high glossiness.

## Description

### TECHNICAL FIELD

Embodiments of the present invention relate to an active energy ray-curable coating varnish using a rosin-modified resin and relate to a laminated body.

### BACKGROUND OF THE INVENTION

In recent years, a technology for protecting surfaces of the base materials themselves or the decorative processing surfaces by using coating varnish, or a technology for performing a glossiness treatment by using coating varnish have been widely applied, wherein the coating varnish is applied to surfaces of various base materials such as paper, plastic films, sheets, and plates, or to surfaces of decorative such as pictorial patterns, designs, or characters applied on the various base materials by means of printing or the like. When active energy ray-curable coating varnish is used as the coating varnish, coating varnish is applied and is irradiated with ultraviolet light, and then the coating varnish is instantly cured and to form a film having high glossiness. Therefore, the active energy ray-curable coating varnish provides higher productivity than conventional plastic covering or solvent-type coating varnish that requires drying. Further, the active energy ray-curable coating varnish is a preferable material from the viewpoint of environmental protection because the varnish does not emit VOCs such as organic solvents into the atmosphere. The active energy ray-curable coating varnish is widely used for printed matters such as magazine covers, picture books, posters, and calendars, and paper containers such as beauty cases. From this viewpoint, the active energy ray-curable coating varnish is required to have high coating film durability in order to protect a base material or printing layer, and is required to have glossiness and the like to impart beauty.

Meanwhile, active energy ray-curable coating varnish is required to have fast-drying performance from the viewpoint of speeding up printing and saving labor. However, as coating varnish becomes compatible with high-speed printing, printing troubles such as surface curing (film formation) in an inkpot of a printing machine caused by ultraviolet light derived from fluorescent lamps and gelation troubles due to a reaction in a container during product storage have occurred. Therefore, active energy ray-curable coating varnish is required to achieve both coating film durability to protect a printing layer and storage stability in which a reaction does not proceed when printing is not performed.

As a method for obtaining high coating film durability, Patent Literature 1 discloses active energy ray-curable coating varnish containing epoxy acrylate, a difunctional to tetrafunctional (meth)acrylate monomer, an initiator, and a dimethyl silicon compound containing a polyoxyalkylene group, for example. However, if a dimethyl silicon compound is used as disclosed in Patent Literature 1, although it is possible to achieve high abrasion resistance and slip properties, it is difficult for the varnish to have sufficient glossiness.

Further, Patent Literature 2 discloses active energy ray-curable varnish containing an animal and plant-derived component such as a rosin-modified resin. However, while excellent glossiness can be produced by an animal and plant-derived component such as a rosin-modified resin, evaluation results of storage stability in a printing machine and storage stability in product storage are insufficient.

In this way, various investigations have been performed for active energy ray-curable coating varnish, but there is no active energy ray-curable coating varnish that can sufficiently achieve both coating film durability and storage stability required for the varnish, and further improvement is desired.

### Citation List

### Patent Literature

Patent Literature 1: Japanese Unexamined Patent Application Publication No. 2015-196765
Patent Literature 2: Japanese Unexamined Patent Application Publication No. 2020-169256

### SUMMARY OF THE INVENTION

### PROBLEMS TO BE SOLVED BY THE INVENTION

The present invention provides active energy ray-curable coating varnish capable of achieving both coating film durability such as abrasion resistance and adhesiveness, and stability in a printing machine and storage stability in product storage while having high glossiness, and a laminated body using the varnish.

### MEANS FOR SOLVING THE PROBLEM

As a result of a diligent study, the present inventor found that active energy ray-curable coating varnish capable of achieving both excellent coating film durability and storage stability can be realized by using a rosin-modified resin and a polymerization inhibitor, leading to the completion of the present invention. That is, embodiments of the present invention relate to the following. However, the present invention is not limited to the embodiments described hereinafter.

An embodiment of the present invention relates to active energy ray-curable coating varnish including: a rosin-modified resin; a polymerization inhibitor; and an active energy ray-curable compound.

The rosin-modified resin is preferably a reaction product of a polyol (C) and an addition reaction product of rosin acids (A) and an α,β-unsaturated carboxylic acid or an acid anhydride thereof (B).

The rosin-modified resin is preferably a reaction product of a polyol (C), a fatty acid (D), and an addition reaction product of rosin acids (A) and an α,β-unsaturated carboxylic acid or an acid anhydride thereof (B).

The blend amount of the fatty acid (D) is preferably 5 to 25 mass%, relative to the total blend amount of a raw material of the rosin-modified resin.

A weight average molecular weight of the rosin-modified resin is preferably 3,000 to 30,000.

The polymerization inhibitor preferably contains a compound having a piperidine structure in a molecule.

Another embodiment of the present invention relates to a laminated body: including a layer that is formed on a base material and is formed by curing the active energy ray-curable coating varnish with an active energy ray.

Another embodiment of the present invention relates to a laminated body: including a layer that is formed on a printing surface of a printed matter in which ink is printed on a base material and is formed by curing the active energy ray-curable coating varnish of the above embodiment with an active energy ray.

The disclosure of the present application relates to the subject matter of Japanese Patent Application No. 2021-133876, filed on August 19, 2021, the entire disclosed content of which is incorporated herein by reference.

### ADVANTAGEOUS EFFECT OF THE INVENTION

According to the present invention, it is possible to provide active energy ray-curable coating varnish capable of achieving both coating film durability such as abrasion resistance and adhesiveness, and stability in a printing machine and storage stability in product storage while having high glossiness, and a laminated body using the varnish.

### DETAILED DESCRIPTION OF THE INVENTION

Embodiments of the present invention will be described below in further detail. However, the present invention is not limited to the embodiments described below, and various variations are possible within the scope of the gist of the present invention.

The term "conjugated double bond" used herein refers to a bond in which a plurality of double bonds are alternately connected with a single bond therebetween. However, a π-electron conjugation system contained in an aromatic compound is excluded from the conjugated double bond.

### <Active energy ray-curable coating varnish>

Active energy ray-curable coating varnish according to an embodiment of the present invention includes at least a rosin-modified resin, a polymerization inhibitor, and an active energy ray-curable compound. Hereinafter, constituent components of the coating varnish will be described more specifically.

### <Polymerization inhibitor>

The active energy ray-curable coating varnish contains the polymerization inhibitor. The polymerization inhibitor can be added and used based on a conventional method. From the viewpoint of not inhibiting curability, the blend amount of the polymerization inhibitor in the active energy ray-curable coating varnish is preferably 3 mass% or less, relative to the total mass of the active energy ray-curable coating varnish. The blend amount is more preferably in a range from 0.01 to 1 mass%.

Specific examples of the polymerization inhibitor that can be used include (alkyl)phenol, hydroquinone, catechol, resorcin, p-methoxyphenol, t-butyl catechol, t-butyl hydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

In one embodiment, the polymerization inhibitor preferably contains a compound having a piperidine structure in a molecule. In particular, a compound having two hydrocarbon groups at a position 2 in a piperidine ring and two hydrocarbon groups at a position 6 (four in total) is preferred. Specific examples of this kind of compound include hindered amine-based compounds such as 2,2,6,6-tetraalkylpiperidine derivatives, 2,2,6,6-tetramethylpiperidine derivatives, 1-alkyl-2,2,6,6-tetramethylpiperidine derivatives, and 1-hydro-2,2,6,6-tetramethylpiperidine derivatives. It is preferable to use one or more compounds selected from the hindered amine-based compounds as the polymerization inhibitor. When such compounds are used, it is possible to inhibit a curing reaction in a printing machine, and excellent storage stability can be easily provided.

### <Rosin-modified resin>

The rosin-modified resin in the present invention means a resin containing a rosin-derived skeleton in a resin skeleton. Due to the resin containing the rosin-derived skeleton, it is possible to suppress cure shrinkage due to UV irradiation during high-speed printing and to maintain smoothness of a dry coating. Accordingly, glossiness and adhesiveness to a base material can be enhanced.

In one embodiment, the rosin-modified resin preferably contains a compound (addition reaction product) obtained by means of a Diels-Alder reaction between an organic acid having a conjugated double bond contained in rosin acids (A) and an α,β-unsaturated carboxylic acid or an acid anhydride thereof (B), and a rosin-modified resin having an ester bond formed by means of a reaction between carboxylic acid groups in an organic acid having no conjugated double bond contained in the rosin acids (A) and other organic acids, and a hydroxyl group in a polyol (C).

In one embodiment, the rosin-modified resin preferably contains a compound (addition reaction product) obtained by means of a Diels-Alder reaction between the organic acid having the conjugated double bond contained in the rosin acids (A) and the α,β-unsaturated carboxylic acid or the acid anhydride thereof (B), and a rosin-modified resin having an ester bond formed by means of a reaction among carboxylic acid groups in the organic acid having no conjugated double bond contained in the rosin acids (A) and other organic acids, the hydroxyl group in the polyol (C), and a carboxylic acid group in a fatty acid (D).

### (Rosin acids (A))

In embodiments of the present invention, the rosin acids (A) used for obtaining the rosin-modified resin refer to a monobasic acid having a cyclic diterpene skeleton, and may be a rosin acid, disproportionated rosin acid, hydrogenated rosin acid, or alkali metal salts of the above compounds. Specifically, examples include an abietic acid having a conjugated double bond and, as conjugated compounds thereof, include a neoabietic acid, palustric acid, and levopimaric acid. In addition, examples include a pimaric acid, isopimaric acid, sandaracopimaric acid, and dehydroabietic acid having no conjugated double bond. In addition, examples of natural resins containing the rosin acids (A) include gum rosin, wood rosin, and tall oil rosin.

In one embodiment, the blend amount of the rosin acids (A) used for obtaining the rosin-modified resin is preferably 20 to 70 mass%, and more preferably 30 to 60 mass%, relative to the total blend amount (total mass) of resin raw materials. If the blend amount of the rosin acids (A) is 20 mass% or more, the glossiness of active energy ray-curable coating varnish containing the resin is enhanced. If the blend amount of the rosin acids (A) is 70 mass% or less, the abrasion resistance of the active energy ray-curable coating varnish is enhanced.

### (α,β-unsaturated carboxylic acid or acid anhydride thereof (B))

In one embodiment, specific examples of an α,β-unsaturated carboxylic acid or an acid anhydride thereof (B) used for obtaining the rosin-modified resin include a maleic acid, fumaric acid, citraconic acid, itaconic acid, crotonic acid, and isocrotonic acid, and acid anhydrides thereof. From the viewpoint of reactivity with the rosin acids (A), a maleic acid or an acid anhydride thereof is preferable.

The blend amount of the α,β-unsaturated carboxylic acid or the acid anhydride thereof (B), relative to the rosin acids (A), is preferably in a range from 60 to 200 mol%, more preferably in a range from 70 to 180 mol%, and particularly preferably in a range from 80 to 155 mol%. If the blend amount of the α,β-unsaturated carboxylic acid or the acid anhydride thereof (B) is adjusted within the above range, it is possible to obtain a rosin-modified resin having excellent abrasion resistance and adhesiveness.

### (Carboxylic acids other than (A), (B), and (D) (hereinafter also referred to as "other organic acids"))

In embodiments of the present invention, in order to obtain the rosin-modified resin, in addition to the rosin acids (A), the α,β-unsaturated carboxylic acid or the acid anhydride thereof (B), and the fatty acid (D), one of other organic acids may be used alone or two or more types may be used in combination.

The blend amount of other organic acids is preferably 0 to 30 mass% and more preferably 0 to 20 mass%, relative to the total blend amount of the raw material of the rosin-modified resin. That is, the blend amount of other organic acids is preferably 30 mass% or less and more preferably 20 mass% or less, relative to the total blend amount of the resin raw material. In one embodiment, the blend amount of other organic acids may be 0 mass%.

Specific examples of other organic acids include the following. However, other organic acids that can be used are not limited to the following.

### (Organic monobasic acid)

The acid is aromatic monobasic acids such as a benzoic acid, methylbenzoic acid, tertiary butyl benzoic acid, naphthoic acid, and ortho-benzoyl benzoic acid.

The acid is a compound with a conjugated double bond but without a cyclic diterpene backbone such as a conjugated linoleic acid, eleostearic acid, parinaric acid, and calendic acid.

### (Alicyclic polybasic acid or acid anhydride thereof)

The acid is 1,2,3,6-tetrahydro-phthalic acid, 3-methyl-1,2,3,6-tetrahydro-phthalic acid, 4-methyl-1,2,3,6-tetrahydro-phthalic acid, 1,2-cyclohexanedicarboxylic acid, 1,3-cyclohexanedicarboxylic acid, and 1,4-cyclohexanedicarboxylic acid, and acid anhydrides thereof.

### (Other organic polybasic acids or acid anhydrides thereof)

The acids are alkenyl succinic acids such as an oxalic acid, malonic acid, succinic acid, glutaric acid, pimelic acid, sebacic acid, azelaic acid, dodecenyl succinic acid, and pentadecenylsuccinic acid; an o-phthalic acid, terephthalic acid, trimellitic acid, and pyromellitic acid, and acid anhydrides thereof.

### <Polyol (C)>

The polyol (C) forms an ester bond by means of a reaction with a compound obtained by means of a Diels-Alder reaction between the organic acid having the conjugated double bond contained in the rosin acids (A), and the α,β-unsaturated carboxylic acid or the acid anhydride thereof (B), the organic acid having no conjugated double bond contained in the rosin acids (A), the fatty acid (D), and other organic acids. In embodiments of the present invention, in order to obtain the rosin-modified resin, one of polyols exemplified below may be used alone, or a combination of two or more polyols may be used. Specific examples of polyols include the following, but are not limited to the following.

### (Linear alkylene divalent polyols)

1,2-ethanediol, 1,2-propanediol, 1,3-propanediol, 1,2-butanediol, 1,4-butanediol, 1,2-pentanediol, 1,5-pentanediol, 1,6-hexanediol, 1,2-hexanediol, 1,5-hexanediol, 2,5-hexanediol, 1,7-heptanediol, 1,8-octanediol, 1,2-octanediol, 1,9-nonanediol, 1,2-decanediol, 1,10-decanediol, 1,12-dodecanediol, 1,2-dodecanediol, 1,14-tetradecanediol, 1,2-tetradecanediol, 1,16-hexadecanediol, and 1,2-hexadecanediol.

### (Branched alkylene divalent polyols)

2-methyl-2,4-pentanediol, 3-methyl-1,5-pentanediol, 2-methyl-2-propyl-1,3-propanediol, 2-butyl-2-ethyl-1,3-propanediol, 2,4-dimethyl-2,4-pentanediol, 2,2-dimethyl-1,3-propanediol, 2,2,4-trimethyl-1,3-pentanediol, dimethyloloctane, 2-ethyl-1,3-hexanediol, 2,5-dimethyl-2,5-hexanediol, 2-methyl-1,8-octanediol, 2-butyl-2-ethyl-1,3-propanediol, and 2,4-diethyl-1,5-pentanediol, and the like.

### (Cyclic divalent polyols)

Cyclic alkylene divalent polyols such as 1,2-cycloheptanediol, tricyclodecanedimethanol, 1,2-cyclohexanediol, 1,2-cyclohexanedimethanol, 1,3-cyclohexanediol, 1,3-cyclohexanedimethanol, 1,4-cyclohexanediol, 1,4-cyclohexanedimethanol, hydrogenated bisphenol A, hydrogenated bisphenol F, hydrogenated bisphenol S, hydrogenated catechol, hydrogenated resorcin, and hydrogenated hydroquinone; and
aromatic divalent polyols such as bisphenol A, bisphenol F, bisphenol S, catechol, resorcin, and hydroquinone.

### (Other divalent polyols)

Divalent polyether polyols such as polyethylene glycol (n = 2 to 20), polypropylene glycol (n = 2 to 20), and polytetramethylene glycol (n = 2 to 20), and polyester polyols, and the like.

### (Trivalent polyols)

Glycerin, trimethylolpropane, 1,2,6-hexanetriol, 3-methylpentane-1,3,5-triol, hydroxymethylhexanediol, trimethyloloctane, and the like.

### (Polyols that are at least tetravalent)

Linear, branched, and cyclic polyols that are at least tetravalent, such as pentaerythritol, diglycerin, ditrimethylolpropane, dipentaerythritol, sorbitol, inositol, and tripentaerythritol.

### <Fatty acid (D)>

In one embodiment, the fatty acid (D) reacts with a hydroxyl group in a product having an ester bond to form an additional ester bond, wherein the product having the ester bond is formed by reacting the polyol (C) with each of the following: the compound obtained by means of the Diels-Alder reaction between the organic acid having the conjugated double bond contained in the rosin acids (A) and the α,β-unsaturated carboxylic acid or the acid anhydride thereof (B); the organic acid having no conjugated double bond contained in the rosin acids (A); and other organic acids.

Specific examples of the fatty acid (D) include linseed oil fatty acids, China wood oil fatty acids, castor oil fatty acids, soybean oil fatty acids, tall oil fatty acids, rice bran oil fatty acids, palm oil fatty acids, coconut oil fatty acids, dehydrated castor oil fatty acids, capric acid, undecanoic acid, lauric acid, myristic acid, palmitic acid, stearic acid, isostearic acid, oleic acid, linoleic acid, linolenic acid, and the like. However, the fatty acid (D) that can be used is not limited to the above.

In one embodiment, the blend amount of the fatty acid (D) is preferably 5 to 25 mass%, relative to the total blend amount of the resin raw material. If the blend amount of the fatty acid (D) is within the above range, the adhesiveness of the active energy ray-curable coating varnish containing the rosin-modified resin obtained by such blend is favorable. Further, if the above blend amount is adjusted to 25 mass% or less, the deterioration in the abrasion resistance of the active energy ray-curable coating varnish can be easily suppressed. It is more preferable that the blend amount of the fatty acid (D) is 5 to 20 mass%, relative to the total blend amount of the resin raw material.

In one embodiment, the weight average molecular weight of the rosin-modified resin is preferably 3,000 to 30,000 and more preferably 3,000 to 15, 000. If the weight average molecular weight of the rosin-modified resin is 3,000 to 30,000, the abrasion resistance and adhesiveness are favorable.

In one embodiment, an acid value of the rosin-modified resin is preferably 20 to 80 mgKOH/g. The acid value is more preferably 30 to 80 mgKOH/g, even more preferably 40 to 80 mgKOH/g, and particularly preferably 50 to 80 mgKOH/g. If the acid value of the rosin-modified resin is within the above range, the active energy ray-curable coating varnish using such a rosin-modified resin has excellent adhesiveness.

In one embodiment, a melting point of the rosin-modified resin is preferably 50°C or higher, and more preferably in a range from 60 to 100°C. The melting point can be measured using Melting Point M-565 manufactured by BUCHI AG at a temperature increase rate of 0.5°C/min.

In one embodiment, it is preferable that the amount of the rosin-modified resin contained in the active energy ray-curable coating varnish is 5 to 40 mass% and the amount of the active energy ray-curable compound contained in the varnish is 20 to 70 mass% (however, the total amount of each component is 100 mass%.).

The rosin-modified resin and the active energy ray-curable compound may be prepared and used in a form of varnish, which will be described later.

### <Active energy ray-curable compound>

In the present specification, the active energy ray-curable compound means a compound having a (meth)acryloyl group in a molecule.

Specific examples of the active energy ray-curable compound that can be used to constitute the active energy ray-curable coating varnish as an embodiment of the present invention include:
monofunctional active energy ray-curable compounds such as 2-ethylhexyl acrylate, methoxydiethylene glycol acrylate, diethylene glycol monophenyl ether acrylate, tetraethylene glycol monophenyl ether acrylate, and acryloyl morpholine;
difunctional active energy ray-curable compounds such as ethylene glycol diacrylate, polyethylene glycol diacrylate (n = 2 to 20), propylene glycol diacrylate, polypropylene glycol diacrylate (n = 2 to 20), alkylene (4 to 12 carbon atoms) glycol diacrylate, alkylene (4 to 12 carbon atoms) glycol ethylene oxide adduct (2 to 20 moles) diacrylate, alkylene (4 to 12 carbon atoms) glycol propylene oxide adduct (2 to 20 moles) diacrylate, hydroxypivalyl hydroxypivalate diacrylate, tricyclodecanedimethylol diacrylate, hydrogenated bisphenol A diacrylate, bisphenol A ethylene oxide adduct (2 to 20 moles) diacrylate, and hydrogenated bisphenol A propylene oxide adduct (2 to 20 moles) diacrylate;
trifunctional active energy ray-curable compounds such as glycerin triacrylate, glycerin ethylene oxide adduct (3 to 30 moles) triacrylate, glycerin propylene oxide adduct (3 to 30 moles) triacrylate, trimethylolpropane triacrylate, trimethylolpropane ethylene oxide adduct (3 to 30 moles) triacrylate, and trimethylolpropane propylene oxide adduct (3 to 30 moles) triacrylate;
tetrafunctional active energy ray-curable compounds such as pentaerythritol tetraacrylate, pentaerythritol ethylene oxide adduct (4 to 40 moles) tetraacrylate, pentaerythritol propylene oxide adduct (4 to 40 moles) tetraacrylate, diglycerin tetraacrylate, diglycerin ethylene oxide adduct (4 to 40 moles) tetraacrylate, diglycerin propylene oxide adduct (4 to 40 moles) tetraacrylate, ditrimethylolpropane tetraacrylate, ditrimethylolpropane ethylene oxide adduct (4 to 40 moles) tetraacrylate, and ditrimethylolpropane propylene oxide adduct (4 to 40 moles) tetraacrylate; and
polyfunctional active energy ray-curable compounds such as dipentaerythritol hexaacrylate, dipentaerythritol ethylene oxide adduct (6 to 60 moles) hexaacrylate, and dipentaerythritol propylene oxide adduct (6 to 60 moles) hexaacrylate.

As the active energy ray-curable compound, one of the exemplified compounds may be used alone or two or more of them may be used in combination.

The active energy ray-curable compound may be selected as appropriate according to required characteristics of a curing film. In addition to the compounds, oligomers such as polyester acrylate, polyurethane acrylate, and epoxy acrylate may be used in combination, as necessary.

The active energy ray-curable coating varnish is cured by means of irradiation with active energy rays. When the coating varnish is cured with ultraviolet light, it is preferable to add photopolymerization initiators to the coating varnish. Generally, the photopolymerization initiators are broadly classified into two types: a type in which a bond is cleaved in a molecule by light and an active specie is produced, and a type in which a hydrogen abstraction reaction is made between molecules and an active specie is produced.

Examples of the former include acetophenone initiators such as 2-benzyl-2-dimethylamino-1-(4-morpholinophenyl)-butanone-1, diethoxyacetophenone, 4-(2-hydroxyethoxy)phenyl-(2-hydroxy-2-propyl)ketone, 2-methyl-2-morpholino(4-thiomethylphenyl)propane-1-one, 2-hydroxy-2-methyl-1-phenyl-propane-1-one, 1-hydroxy-cyclohexyl-phenyl ketone, [4-(2-hydroxyethoxy)-phenyl]-2-hydroxy-2-methyl-1-propane-1-one, benzyl dimethyl ketal, oligo{2-hydroxy-2-methyl-1-[4-(1-methylvinyl)phenyl]propane}, and 4-(2-acryloyl-oxyethoxy)phenyl-2-hydroxy-2-propyl ketone;
benzoin initiators such as benzoin, benzoin isopropyl ether, and benzoin isobutyl ether;
a mixture of 1-hydroxycyclohexyl-phenyl ketone and benzophenone, and acylphosphine oxide initiators such as 2,4,6-trimethylbenzoyldiphenylphosphine oxide and bis(2,4,6-trimethylbenzoyl)-phenylphosphine oxide; and
benzyl, methylphenylglyoxy ester, and 3,3',4,4'-tetra(t-butylperoxycarbonyl)benzophenone.

Examples of the latter include benzophenone initiators such as benzophenone, methyl o-benzoylbenzoate, 4-phenylbenzophenone, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, and 3,3'-dimethyl-4-methoxybenzophenone;
thioxanthone initiators such as 2-isopropylthioxanthone, 2,4-dimethylthioxanthone, 2,4-diethylthioxanthone, and 2,4-dichlorothioxanthone;
aminobenzophenone initiators such as Michler's ketone and 4,4'-bisdiethylaminobenzophenone; and
10-butyl-2-chloroacridone, 2-ethylanthraquinone, 9,10-phenanthrenequinone, and camphorquinone.

One of the photopolymerization initiators may be used alone, or a combination of two or more photopolymerization initiators may be used as needed.

When the active energy ray-curable coating varnish of the above embodiment is irradiated with ultraviolet light to cure the coating varnish, it is sufficient if the photopolymerization initiator is added to the coating varnish. However, in one embodiment, the photopolymerization initiator and a photosensitizer may be used in combination to further enhance the curability.

Examples of the photosensitizer include amines such as triethanolamine, methyldiethanolamine, dimethylethanolamine, triisopropanolamine, methyl 4-dimethylaminobenzoate, ethyl 4-dimethylaminobenzoate, isoamyl 4-dimethylaminobenzoate, ethyl benzoate(2-dimethylamino), ethyl 4-dimethylaminobenzoate(n-butoxy), and 2-ethylhexyl 4-dimethylaminobenzoate.

When ultraviolet light is used as an active energy ray, the blend amount of the photopolymerization initiator is preferably 0.01 to 20 mass% and more preferably 0.05 to 15 mass%, relative to the total mass of the active energy ray-curable coating varnish. When the blend amount is 0.01 mass% or more, a curing reaction proceeds sufficiently. Further, when the blend amount is 20 mass% or less, it is easy to suppress the occurrence of a thermal polymerization reaction and achieve the suitable stability of the active energy ray-curable coating varnish. When ionization radiation other than ultraviolet light is used as an active energy ray, it is not necessary to blend a photopolymerization initiator.

Depending on a purpose, the active energy ray-curable coating varnish may further contain various additives such as an anti-friction agent, anti-blocking agent, and slipping agent. Various additives may be added to the coating varnish by means of a conventional method. When various additives are added to the coating varnish, it is preferable to adjust the blend amount to the extent that the effect of other coating varnish materials is not inhibited. The blend amount of various additives is preferably 15 mass% or less, relative to the total mass of the active energy ray-curable coating varnish.

### <Raw material varnish for active energy ray-curable coating varnish>

The active energy ray-curable coating varnish as an embodiment of the present invention can also be produced from raw material varnish for the active energy ray-curable coating varnish containing a rosin-modified resin.

The raw material varnish for the active energy ray-curable coating varnish contains at least a rosin-modified resin and an active energy ray-curable compound. It is preferable that the amount of the rosin-modified resin contained in the raw material varnish is 30 to 80 mass% and the amount of the active energy ray-curable compound contained in the raw material varnish is 20 to 70 mass%, relative to the total mass of the raw material varnish.

A blend ratio ((a):(b)) of a rosin-modified resin (a) and an active energy ray-curable compound (b) in the raw material varnish for the active energy ray-curable coating varnish is preferably in a range from 30:70 to 75:25 and more preferably in a range from 35:65 to 70:30 by mass ratio.

In one embodiment, the raw material varnish for the active energy ray-curable coating varnish may further contain a polymerization inhibitor in addition to the above components. In this kind of embodiment, a polymerization inhibitor may be added and used based on a conventional method. When a polymerization inhibitor is added to the raw material varnish, the blend amount thereof is preferably 3 mass% or less, relative to the total mass of the raw material varnish for the active energy ray-curable coating varnish. The blend amount is more preferably in a range from 0.01 to 1 mass%.

Specific examples of the polymerization inhibitor that can be used include (alkyl)phenol, hydroquinone, catechol, resorcin, p-methoxyphenol, t-butyl catechol, t-butyl hydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

Although there are no particular limitations, it is preferable to use one or more compounds selected from the group consisting of hydroquinone, p-methoxyphenol, t-butyl hydroquinone, p-benzoquinone, and 2,5-di-tert-butyl-p-benzoquinone.

The polymerization inhibitor contained in the raw material varnish for the active energy ray-curable coating varnish also corresponds to the polymerization inhibitor contained in the active energy ray-curable coating varnish.

In one embodiment, the amount of the polymerization inhibitor contained in the raw material varnish for the active energy ray-curable coating varnish is preferably 0 to 80 mass% and more preferably 0 to 60 mass%, relative to the total mass of the polymerization inhibitor contained in the active energy ray-curable coating varnish. That is, the amount of the polymerization inhibitor contained in the raw material varnish is preferably 80 mass% or less and more preferably 60 mass% or less, relative to the total mass of the polymerization inhibitor contained in the coating varnish. In one embodiment, the amount of the polymerization inhibitor contained in the raw material varnish may be 0 mass%.

The raw material varnish for the active energy ray-curable coating varnish can be produced, for example, by mixing the above components under a temperature condition between normal temperature and 160°C.

Specifically, raw material varnish obtained by heating and melting a rosin-modified resin, trimethylolpropane ethylene oxide adduct triacrylate, and hydroquinone at a temperature of 100°C can be suitably used.

It is preferable to perform irradiation with an active energy ray under an inert gas replacement atmosphere such as nitrogen gas, but no problems are caused even if irradiation is performed in the atmosphere. The following is effective to end curing quickly: heating a coating layer of the active energy ray-curable coating varnish by using an infrared heater or the like before irradiation is performed with an active energy ray; or heating a curing layer of the active energy ray-curable coating varnish by using an infrared heater or the like after irradiation is performed with an active energy ray.

In the present specification, typical examples of the active energy ray include ionization radiation such as ultraviolet light, electron rays, X-rays, α-rays, β-rays, and γ-rays, microwaves, and high frequencies. However, the active energy ray is not limited to the above, and any energy species can be adopted as long as radical active species can be generated. Examples can include visible light, infrared light, and laser light.

With ultraviolet light as a source, examples include LEDs, ultra-high pressure mercury lamps, high pressure mercury lamps, medium pressure mercury lamps, low pressure mercury lamps, metal-halide lamps, xenon lamps, carbon arc lamps, helium cadmium lasers, YAG lasers, excimer lasers, and argon lasers.

The active energy ray-curable coating varnish as an embodiment of the present invention is applied to various base materials or various printed matters such as form printed matters, various book printed matters, various packaging printed matters such as carton paper, various plastic printed matters, seal/label printed matters, art printed matters, and metal printed matters (art printed matters, beverage can printed matters, and food printed matters such as canned food).

### <Laminated body>

A laminated body as an embodiment of the present invention has a base material and a curing layer which is formed on the base material using the active energy ray-curable coating varnish of the above embodiment. In another embodiment, the laminated body includes a printed matter in which ink is printed on a base material and a curing layer which is formed on a printing surface of the printed matter using an active energy ray-curable coating varnish of the above embodiment. These laminated bodies are obtained by printing or coating, and curing the active energy ray-curable coating varnish of the above embodiment on the base material or on the printing surface of the printed matter in which ink is printed on the base material. Curing of the coating varnish can be performed by irradiating the varnish with an active energy ray. For example, ultraviolet light can be used as an active energy ray.

There are no particular limitations on the base material, and a known base material can be used. Specific examples include coated paper such as art paper, coat paper, and cast paper, uncoated paper such as fine paper, medium quality paper, and newsprint, synthetic paper such as YUPO paper, and plastic films such as polyethylene terephthalate (PET), polypropylene (PP), and biaxially stretched polypropylene (OPP).

In addition, there are no particular limitations on ink to be printed on a base material to obtain a printed matter. Any ink suitable for a known printing method such as offset printing, gravure printing, flexographic printing, and inkjet printing can be used as the ink.

Examples of a method for printing or coating the active energy ray-curable coating varnish on the base material or on the printing surface of the printed matter in which ink is printed on the base material include a roll coater, a gravure coater, a flexo coater, an air doctor coater, a blade coater, an air knife coater, a squeeze coater, an impregnation coater, a transfer roll coater, a kiss coater, a curtain coater, a cast coater, a spray coater, a die coater, offset printing (regular lithography using dampening water and waterless lithography without dampening water), flexo printing, gravure printing, screen printing, and inkjet printing.

### Examples

The present invention will be described in more detail with reference to the following examples, but the present invention is not limited to the following examples. In the present specification, "part" represents "parts by mass" and "%" represents "mass%".

Details of various measurements performed in the following examples are as follows.

### (Weight average molecular weight)

A weight average molecular weight was measured by means of gel permeation chromatography (HLC-8320) manufactured by TOSOH CORPORATION. A calibration curve was created using a standard polystyrene sample. Further, tetrahydrofuran was used as an eluent, and three TSKgel SuperHM-M columns (manufactured by TOSOH CORPORATION) were used. Measurements were performed under following conditions: flow rate: 0.6 mL/min, injection volume: 10 µl, and column temperature: 40°C.

### (Acid value)

An acid value was measured by means of a neutralization titration method. Specifically, first, 1 g of a rosin-modified resin was dissolved in 20 mL of a solvent in which xylene and ethanol were mixed at a mass ratio of xylene : ethanol = 2:1, and a solution of the rosin-modified resin was obtained. Then, 3 mL of 3 mass% phenolphthalein solution was added to the previously prepared solution of the rosin-modified resin as an indicator, and neutralization titration was performed with 0.1 mol/L of an ethanolic potassium hydroxide solution. The unit of acid value was mgKOH/g.

### (Component analysis of rosin acids)

Rosin acids used as raw materials were analyzed using a gas chromatography mass spectrometer, and the ratio of each peak area (%) relative to the total rosin acid peak area (100%) was obtained. More specifically, the content ratio of a conjugated rosin acid, which is contained in the rosin acids and performs a Diels-Alder addition reaction with the α,β-unsaturated carboxylic acid or the acid anhydride thereof (B), and components other than the conjugated rosin acid was determined from the ratio of the corresponding peak areas.

### (Confirmation of proceeding of Diels-Alder addition reaction and determination of the resulting addition reaction product)

The reaction solution of the Diels-Alder addition reaction was analyzed using a gas chromatography mass spectrometer, and proceeding of the reaction was confirmed by means of a decrease in detection peaks of the rosin acids (A) used as raw materials and the α,β-unsaturated carboxylic acid or the acid anhydride thereof (B). The reaction was ended when there was no change in a decrease of detection peaks.

### (Preparation of rosin-modified resin, raw material varnish, and active energy ray-curable coating varnish composition)

A rosin-modified resin, raw material varnish, and active energy ray-curable coating varnish were prepared according to formulations of examples and comparative examples described below.

In gum rosin used in formulations described below, the amount of the conjugated rosin acid that performs a Diels-Alder addition reaction with the α,β-unsaturated carboxylic acid or the acid anhydride thereof (B) is 80 mass%, and the amount of components other than the conjugated rosin acid was 20 mass%.

### <1> Preparation of rosin-modified resin

### (Synthesis Example 1)

A four-neck flask equipped with a stirrer, a reflux condenser with a water separator, and a thermometer was charged with 37 parts of gum rosin and 19 parts of maleic anhydride, and the mixture was heated at 180°C for one hour while blowing nitrogen gas to obtain a reaction mixture. Then, the end of the Diels-Alder addition reaction was confirmed by performing gas chromatography-mass spectrometry on the reaction mixture as previously described.

Then, to the reaction mixture, 10 parts of tetrahydrophthalic anhydride, 25 parts of neopentyl glycol, 9 parts of trimethylolpropane, and 0.1 parts of p-toluenesulfonic acid monohydrate as a catalyst were added, a dehydration condensation reaction was performed at 240°C for 8 hours, and resin 1 was obtained.

An acid value of resin 1 was 70, and a weight average molecular weight (Mw) in terms of GPC measurement (polystyrene equivalent basis) was 24,000.

### (Synthesis Example 2)

A four-neck flask equipped with a stirrer, a reflux condenser with a water separator, and a thermometer was charged with 46 parts of gum rosin and 13 parts of maleic anhydride, and the mixture was heated at 180°C for one hour while blowing nitrogen gas to obtain a reaction mixture. Next, to the reaction mixture, 4 parts of 1,4-cyclohexanedimethanol, 19 parts of neopentyl glycol, 6 parts of trimethylolpropane, and 0.1 parts of p-toluenesulfonic acid monohydrate as a catalyst were added, a dehydration condensation reaction was performed at 240°C for 8 hours, then 12 parts of tall oil fatty acids were added to the mixture, and a dehydration condensation reaction was performed for 3 hours to obtain resin 2. An acid value of resin 2 was 52, and the Mw was 7,500.

### (Synthesis Example 3)

Resin 3 was obtained by performing the same operation as in Synthesis Example 2 with a formulation shown in Table 1. An acid value of resin 3 was 55 and the Mw was 8,600.

### (Synthesis Example 4)

Resin 4 was obtained by performing the same operation as in Synthesis Example 2 with a formulation shown in Table 1. An acid value of resin 4 was 44 and the Mw was 33,700.

### (Synthesis Example 5)

Resin 5 was obtained by performing the same operation as in Synthesis Example 2 with a formulation shown in Table 1. An acid value of resin 5 was 35 and the Mw was 32,100.

### (Synthesis Example 6)

Resin 6 was obtained by performing the same operation as in Synthesis Example 2 with a formulation shown in Table 1. An acid value of resin 6 was 56 and the Mw was 4,100.

### (Synthesis Example 7)

Resin 7 was obtained by performing the same operation as in Synthesis Example 2 with a formulation shown in Table 1. An acid value of resin 7 was 78 and the Mw was 15,400.

### (Synthesis Example 8)

Resin 8 was obtained by performing the same operation as in Synthesis Example 2 with a formulation shown in Table 1. An acid value of resin 8 was 59 and the Mw was 28,300.

### (Resin A for comparative example)

Diallyl phthalate resin "DAP A" manufactured by OSAKA SODA CO., LTD. was used.

### (Resin B for comparative example)

To a four-neck flask equipped with a stirrer, a reflux condenser with a water separator, and a thermometer, 48 parts of maleic anhydride, 31 parts of neopentyl glycol, 21 parts of trimethylolpropane, and 0.1 parts of p-toluenesulfonic acid monohydrate as a catalyst were added, and a dehydration condensation reaction was performed at 240°C for 9 hours while blowing nitrogen gas to obtain resin B.

An acid value of resin B was 21, and a weight average molecular weight (Mw) in terms of GPC measurement (polystyrene equivalent basis) was 25,000.

### (Resin C for comparative example)

To a four-neck flask equipped with a stirrer, a reflux condenser with a water separator, and a thermometer, 10 parts of maleic anhydride, 37 parts of tetrahydrophthalic anhydride, 11 parts of 1,4-cyclohexanedimethanol, 21 parts of neopentyl glycol, 11 parts of trimethylolpropane, and 0.1 parts of p-toluenesulfonic acid monohydrate as a catalyst were added, a dehydration condensation reaction was performed at 240°C for 7 hours while blowing nitrogen gas, then 10 parts of tall oil fatty acids were added to the mixture, and a dehydration condensation reaction was performed for 3 hours to obtain resin C.

An acid value of resin C was 23, and a weight average molecular weight (Mw) in terms of GPC measurement (polystyrene equivalent basis) was 22,000.

### [Table 1]

**Table 1**

| | | | Resin 1 | Resin 2 | Resin 3 | Resin 4 | Resin 5 | Resin 6 | Resin 7 | Resin 8 | Resin B | Resin C |
|---|---|---|---|---|---|---|---|---|---|---|---|---|
| Blend amount | (B) | Maleic anhydride | 19 | 13 | 11 | 10 | 16 | 12 | 13 | 16 | 48 | 10 |
| | (A) | Gum rosin | 37 | 46 | 38 | 42 | 34 | 45 | 58 | 46 | | |
| | Other organic acids | Tetrahydrophthalic anhydride | 10 | | | 12 | | | | | | 37 |
| | (C) | 1,4-cyclohexanedimethanol | | 4 | | 7 | | | 3 | 8 | | 11 |
| | | Neopentyl glycol | 25 | 19 | 10 | 10 | 11 | 14 | 10 | 15 | 31 | 21 |
| | | Trimethylolpropane | 9 | 6 | 13 | | | 9 | 6 | 8 | 21 | 11 |
| | | Pentaerythritol | | | | 8 | 10 | | | | | |
| | (D) | Tall oil fatty acid | | 12 | 28 | 11 | 29 | 20 | 10 | 7 | | 10 |
| | Total amount of resin raw materials | | 100 | 100 | 100 | 100 | 100 | 100 | 100 | 100 | 100 | 100 |
| | Catalyst | p-toluenesulfonic acid monohydrate | 0.1 | 0.1 | 0.1 | 0.1 | 0.1 | 0.1 | 0.1 | 0.1 | 0.1 | 0.1 |
| Weight average molecular weigh (Mw) | | | 24000 | 7500 | 8600 | 33700 | 32100 | 4100 | 15400 | 28300 | 25000 | 22000 |
| Acid value (mgKOH/g) | | | 70 | 52 | 55 | 44 | 35 | 56 | 78 | 59 | 21 | 23 |
| mol% of (B) relative to conjugation (A) | | | 198 | 109 | 112 | 92 | 181 | 103 | 86 | 134 | - | - |

SYLFAT FA1 manufactured by KRATON CORPORATION was used as a tall oil fatty acid.

### <2> Preparation of raw material varnish for active energy ray-curable coating varnish

For each of resins 1 to 8, resin B, resin C, and resin A obtained by means of the above methods, 55 parts of resins, 44.9 parts of trimethylolpropane ethylene oxide adduct triacrylate, and 0.1 parts of hydroquinone were mixed, and these were heated and melted at 100°C to obtain raw material varnish 1 to 8, A, B, and C. As the trimethylolpropane ethylene oxide adduct triacrylate, ARONIX M-350 manufactured by TOAGOSEI CO., LTD. was used.

### <3> Preparation of active energy ray-curable coating varnish

### (Examples 1 to 11 and Comparative Examples A to D)

Materials shown in Table 2 were mixed and stirred at 50°C for 30 minutes to obtain active energy ray-curable coating varnish of Examples 1 to 11 and Comparative Examples A to D.

The raw material varnish for the active energy ray-curable coating varnish obtained by means of the above method was used as raw material varnish. As the trimethylolpropane ethylene oxide adduct triacrylate, ARONIX M-350 manufactured by TOAGOSEI CO., LTD. was used. Further, POLYSTOP 7300P is a polymerization inhibitor which is constituted by a compound having a piperidine structure in a molecule and is manufactured by Hakuto Co., Ltd.

### [Table 2]

**Table 2**

| | | Examples | | | | | | | | | | | Comparative examples | | | |
|---|---|---|---|---|---|---|---|---|---|---|---|---|---|---|---|---|
| | | 1 | 2 | 3 | 4 | 5 | 6 | 7 | 8 | 9 | 10 | 11 | A | B | C | D |
| Used raw material varnish | | varnish 1 | varnish 2 | varnish 3 | varnish 4 | varnish 5 | varnish 6 | varnish 7 | varnish 8 | varnish 9 | varnish 10 | varnish 11 | varnish A | varnish B | varnish C | varnish 2 |
| Formu -lation | Raw material varnish | 20 | 18 | 26 | 18 | 22 | 21 | 20 | 19 | 20 | 18 | 40 | 20 | 20 | 20 | 20 |
| | Dipentaerythritol hexaacrylate | 40 | 42 | 40 | 40 | 38 | 41 | 40 | 41 | 40 | 42 | 40 | 40 | 40 | 40 | 40 |
| | Trimethylolpropane ethylene oxide adduct triacrylate | 11 | 11 | 11 | 13 | 11 | 11 | 11 | 11 | 11 | 11 | | 12 | 12 | 12 | 12 |
| | Ditrimethylolpropane tetraacrylate | 13.9 | 13.9 | 7.9 | 13.9 | 13.9 | 11.9 | 13.9 | 13.9 | 13.9 | 13.7 | 4.9 | 13.9 | 13.9 | 13.9 | 14 |
| | 4-methylbenzophenone | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | 2,4,6-trimethylbenzoyldiphenylphosphine oxide | 12.5 | 12.5 | 12.5 | 12.5 | 12.5 | 12.5 | 12.5 | 12.5 | 12.5 | 12.5 | 12.5 | 11.5 | 11.5 | 11.5 | 11.5 |
| | POLYSTOP 7300P | 0.1 | 0.1 | 0.1 | 0.1 | 0.1 | 0.1 | 0.1 | 0.1 | | | 0.1 | 0.1 | 0.1 | 0.1 | |
| | 2,2,6,6-tetramethylpiperidine-1-oxyl | | | | | | | | | 0.1 | | | | | | |
| | Hydroquinone | | | | | | | | | | 0.3 | | | | | |
| | Total | 100 | 100 | 100 | 100 | 100 | 100 | 100 | 100 | 100 | 100 | 100 | 100 | 100 | 100 | 100 |

### <4> Evaluation of active energy ray-curable coating varnish

For the previously prepared active energy ray-curable coating varnish of Examples 1 to 11 and Comparative Examples A to D, product stability and print film suitability were evaluated according to the following method.

### <Evaluation of stability>

### (Evaluation of storage stability)

The active energy ray-curable coating varnish of Examples 1 to 11 and Comparative Examples A to D was placed in a stationary position in a sealed container at 60°C for one week. After stirring, the varnish was filtered through a 80 mesh metal mesh and the amount of aggregates on the mesh was visually evaluated. "3" or above in the evaluation criteria below was taken as a level at which practical application presents no problems.

### (Evaluation criteria)

5: There are no aggregates.
4: Slightly small aggregates are present.
3: Small aggregates are present.
2: Small aggregates and slightly larger aggregates are present.
1: A number of large aggregates are present.

### (Evaluation of stability in printing machine)

60 g of the active energy ray-curable coating varnish of Examples 1 to 11 and Comparative Examples A to D was placed in a 100 ml brown bottle made of plastic, and left under fluorescent lighting in ambient air for 24 hours without putting a lid on the bottle. Then, a surface curing state of the active energy ray-curable coating varnish was visually evaluated. "3" or above in the evaluation criteria below was taken as a level at which practical application presents no problems.

### (Evaluation criteria)

5: No surface curing occurs.
4: Surface curing occurs on a part of a surface (less than 1% of the area).
3: Surface curing occurs on a part of a surface (1% or more and less than 10% of the area).
2: Surface curing occurs on a part of a surface (10% or more and less than 50% of the area).
1: Surface curing occurs on a part (50% or more of the area) or on the whole of a surface.

### <Evaluation 1 of print film suitability>

A black ink of FD Carton X (active energy ray-curable ink manufactured by TOYO INK CO., LTD.) was printed on Maricoat paper (coated cardboard manufactured by Hokuetsu Paper Mills, Ltd.) at a coating amount of 1 g/m² using an RI tester (a simple color spreading device manufactured by AKIRA SEISAKUSHO). Next, a surface (ink layer) of a printed matter was irradiated with ultraviolet light at 60 m/min using one air-cooled metal halide lamp (manufactured by TOSHIBA CORPORATION) of 120 W/cm to cure the ink layer.

Next, the active energy ray-curable coating varnish of Examples 1 to 11 and Comparative Examples A to D was coated on the cured ink layer with a bar coater #2 to form a coating layer. Next, the coating layer was irradiated with ultraviolet light at 60 m/min using one air-cooled metal halide lamp (manufactured by TOSHIBA CORPORATION) of 120 W/cm, and the coating layer was cured (a curing layer was formed) to obtain a laminated body.

The glossiness and abrasion resistance of the resulting laminated body were evaluated according to the following. The results of each evaluation are shown in Table 3.

### (Glossiness)

For the laminated body obtained as described above, a 60° glossiness value of a test sample was measured using a glossimeter (gloss meter) model GM-26 (manufactured by MURAKAMI COLOR RESEARCH LABORATORY). From the obtained glossiness value, the glossiness was evaluated in five stages according to the following criteria. The higher the numerical value of the glossiness value, the better the glossiness. "3" or above in the evaluation criteria below was taken as a level at which practical application presents no problems.

### (Evaluation criteria)

5: A glossiness value is 80 or more.
4: A glossiness value is 60 or more and less than 80.
3: A glossiness value is 40 or more and less than 60.
2: A glossiness value is 20 or more and less than 40.
1: A glossiness value is less than 20.

### (Abrasion resistance)

The abrasion resistance was evaluated by performing a test on a printing surface (coating film) of the laminated body obtained as described above in accordance with JIS-K5701-1. Specifically, fine paper was used as friction paper, and a color fastness rubbing tester (manufactured by TESTER SANGYO CO,. LTD.) was moved back and forth over the surface of the coating film 500 times while applying a load of 500 g thereon. Then, changes in the friction surface (coating film surface) were visually observed and the abrasion resistance was evaluated in 5 stages according to the following criteria. "3" or above in the evaluation criteria below was taken as a level at which practical application presents no problems.

### (Evaluation criteria)

5: No change is observed on a printing surface.
4: Scratches are observed in a part of a printing surface, but peeling is not observed.
3: Peeling is observed in a part (less than 10% of the area) of a printing surface.
2: Peeling is observed in a part (10% or more and less than 50% of the area) of a printing surface.
1: Peeling is observed in a part (50% or more of the area) or the whole of a printing surface.

In addition, a black ink of FD Carton X (an active energy ray-curable ink manufactured by TOYO INK CO., LTD.) was printed on a PET film at a coating amount of 1 g/m² using an RI tester (a simple color spreading device manufactured by AKIRA SEISAKUSHO). Next, a surface (ink layer) of a printed matter was irradiated with ultraviolet light at 60 m/min using one air-cooled metal halide lamp (manufactured by TOSHIBA CORPORATION) of 120 W/cm, and the ink layer was cured.

Next, the active energy ray-curable coating varnish of Examples 1 to 11 and Comparative Examples A to D was coated on the cured ink layer using a bar coater #2 to form a coating layer. Next, the coating layer was irradiated with ultraviolet light at 60 m/min using one air-cooled metal halide lamp (manufactured by TOSHIBA CORPORATION) of 120 W/cm, and the coating layer was cured (a curing layer was formed) to obtain a laminated body. Further, a PP film was used instead of the PET film, and the laminated body was obtained by means of a method similar to that described above.

The adhesiveness of each laminated body was evaluated according to the following. Table 3 shows evaluation results.

### (Adhesiveness)

A cellophane tape peeling test was performed on the laminated bodies which were formed on the PET film and the PP film and were obtained as described above to evaluate the adhesiveness. A surface of a printed matter after performing the test was visually observed, and the adhesiveness was evaluated in five stages according to the following criteria. "3" in the evaluation criteria below was taken as a level at which practical application presents no problems.

### (Evaluation criteria)

5: No change is observed on a printing surface.
4: Scratches are observed in a part of a printing surface, but peeling is not observed.
3: Peeling is observed in a part (less than 10% of the area) of a printing surface.
2: Peeling is observed in a part (less than 10 to 50% of the area) of a printing surface.
1: Peeling is observed in a part (50% or more of the area) or the whole of a printing surface.

### [Table 3]

**Table 3**

| | Examples | | | | | | | | | | | Comparative examples | | | |
|---|---|---|---|---|---|---|---|---|---|---|---|---|---|---|---|
| | 1 | 2 | 3 | 4 | 5 | 6 | 7 | 8 | 9 | 10 | 11 | A | B | C | D |
| Storage stability | 5 | 5 | 5 | 5 | 5 | 5 | 5 | 5 | 5 | 4 | 5 | 5 | 5 | 5 | 1 |
| Stability in printing machine | 5 | 5 | 5 | 5 | 5 | 5 | 5 | 5 | 5 | 3 | 5 | 5 | 5 | 5 | 1 |
| Glossiness | 3 | 5 | 5 | 5 | 5 | 5 | 5 | 5 | 5 | 5 | 5 | 2 | 2 | 2 | 5 |
| Abrasion resistance | 5 | 5 | 3 | 5 | 3 | 4 | 5 | 5 | 5 | 5 | 3 | 5 | 2 | 5 | 5 |
| PET adhesiveness | 4 | 5 | 4 | 3 | 3 | 5 | 5 | 4 | 5 | 5 | 5 | 1 | 2 | 2 | 5 |
| PP adhesiveness | 3 | 5 | 5 | 3 | 4 | 5 | 5 | 4 | 5 | 5 | 5 | 1 | 1 | 2 | 5 |

As shown in Table 3, the active energy ray-curable coating varnish of Examples 1 to 11 and the laminated body using the varnish are at a usable level in all evaluations of storage stability, stability in a printing machine, glossiness, abrasion resistance, and adhesiveness, and it can be seen that excellent stability and print film suitability can be achieved at the same time. Meanwhile, for the active energy ray-curable coating varnish of Comparative Examples A to D and the laminated body using the varnish, it was difficult to achieve both stability and print film suitability.

More specifically, as seen in the active energy ray-curable coating varnish of Comparative Example D, when the varnish did not include a polymerization inhibitor, radicals occurred in the varnish could not be trapped, a polymerization reaction proceeded, and therefore storage stability and stability in a printing machine were decreased.

Meanwhile, the active energy ray-curable coating varnish of Comparative Examples A to C does not contain the rosin acids (A). Therefore, it is considered that the glossiness is reduced because the cure shrinkage caused by UV irradiation may not be suppressed and the smoothness of the dry coating may not be maintained. It is also considered that the curling of the dry coating occurs due to the cure shrinkage and the adhesiveness is reduced.

The abrasion resistance of the active energy ray-curable coating varnish of Comparative Example B was reduced. Since an acid component is constituted by only the α,β-unsaturated carboxylic acid or the acid anhydride thereof (B) and rigidity of the resin is not sufficient, it is considered that this affected the strength reduction of a cured film.

### <Evaluation 2 of print film suitability>

The active energy ray-curable coating varnish of Examples 1 to 11 and Comparative Examples A to D was coated on Maricoat paper, a PET film, and a PP film using a bar coater #2 to form a coating layer. Then, the coating layer was irradiated with ultraviolet light at 60 m/min using one air-cooled metal halide lamp (manufactured by TOSHIBA CORPORATION) of 120 W/cm, the coating layer was cured (a curing layer was formed), and a laminated body was obtained.

The glossiness, abrasion resistance, and adhesiveness of the obtained laminated body were evaluated by means of a method similar to that described above, and all of them achieved a level at which practical application presents no problems.

## Claims

1. Active energy ray-curable coating varnish comprising:
a rosin-modified resin;
a polymerization inhibitor; and
an active energy ray-curable compound.

2. The active energy ray-curable coating varnish according to claim 1, wherein
the rosin-modified resin is a reaction product of a polyol (C) and an addition reaction product of rosin acids (A) and an α,β-unsaturated carboxylic acid or an acid anhydride thereof (B).

3. The active energy ray-curable coating varnish according to claim 1, wherein
the rosin-modified resin is a reaction product of a polyol (C), a fatty acid (D), and an addition reaction product of rosin acids (A) and an α,β-unsaturated carboxylic acid or an acid anhydride thereof (B).

4. The active energy ray-curable coating varnish according to claim 3, wherein
the blend amount of the fatty acid (D) is 5 to 25 mass%, relative to the total blend amount of a raw material of the rosin-modified resin.

5. The active energy ray-curable coating varnish according to any one of claims 1 to 4, wherein
a weight average molecular weight of the rosin-modified resin is 3,000 to 30,000.

6. The active energy ray-curable coating varnish according to any one of claims 1 to 5, wherein
the polymerization inhibitor contains a compound having a piperidine structure in a molecule.

7. A laminated body comprising:
a base material; and
a curing layer that is formed on the base material using the active energy ray-curable coating varnish according to any one of claims 1 to 6.

8. A laminated body comprising:
a printed matter in which ink is printed on a base material; and
a curing layer that is formed on a printing surface of the printed matter using the active energy ray-curable coating varnish according to any one of claims 1 to 6.
